Europäisches Patentamt

European Patent Office

Office européen des brevets

(11) Numéro de publication: **0 345 852**

**A1**

## (12) DEMANDE DE BREVET EUROPEEN

(21) Numéro de dépôt: 89201334.3

(22) Date de dépôt: 25.05.89

(51) Int. Cl.⁴: **G01S 7/52 , G06F 15/68**

(30) Priorité: 31.05.88 FR 8807210

(43) Date de publication de la demande:
**13.12.89 Bulletin 89/50**

(84) Etats contractants désignés:
**DE FR GB**

(71) Demandeur: **LABORATOIRES
D'ELECTRONIQUE ET DE PHYSIQUE
APPLIQUEE L.E.P.
3, Avenue Descartes
F-94450 Limeil-Brévannes(FR)**

(84) **FR**

Demandeur: **N.V. Philips'
Gloeilampenfabrieken
Groenewoudseweg 1
NL-5621 BA Eindhoven(NL)**

(84) **DE GB**

(72) Inventeur: **Collet-Billon, Antoine SOCIETE
CIVILE S.P.I.D.
209, Rue de l'Université
F-75007 Paris(FR)**

(74) Mandataire: **Charpail, François et al
Société Civile S.P.I.D. 209, rue de l'Université
F-75007 Paris(FR)**

(54) Echographe ultrasonore à bruit d'interférence réduit.

(57) Echographe ultrasonore comprenant au moins un transducteur piézoélectrique (100), un étage (200) d'émission d'un faisceau ultrasonore, et un étage (300) de réception et de traitement des signaux échographiques e renvoyés vers le transducteur (100). Selon l'invention ledit étage (300) de réception et de traitement comporte au moins un filtre morphologique en échelle de gris (302,303) et réalisé à l'aide de moyens élémentaires d'érosion (302e,303e) et de dilatation (302d,303d) appliqués auxdits signaux échographiques.

Application à l'échographie ultrasonore médicale.

FIG. 1

## ECHOGRAPHE ULTRASONORE A BRUIT D'INTERFERENCE REDUIT.

La présente invention concerne un échographe ultrasonore comprenant au moins un transducteur piézoélectrique, un étage d'émission d'un faisceau ultrasonore, et un étage de réception et de traitement des signaux échographiques e renvoyés vers le transducteur.

L'invention trouve une application particulièrement avantageuse dans le domaine de l'échographie médicale, et plus spécialement dans celui de la formation d'images d'organes.

Le problème technique général que doit résoudre tout échographe ultrasonore conforme au préambule consiste, le plus souvent, à obtenir une image aussi exacte que possible du milieu soumis à exploration, quant à ses contours et aux parois spéculaires qu'il contient.

Diverses solutions à ce problème technique général ont déjà été proposées par le passé. Citons, en particulier, l'article de M. Fink "Imagerie ultrasonore" paru dans le Journal de Physique Appliquée 18 (1983) p. 527-556, qui analyse de façon exhaustive les divers aspects de la formation échographique d'images. Toutes les solutions connues de l'état de la technique, si elles conduisent à des résultats souvent satisfaisants, présentent pourtant certaines limites. En effet, la détermination des contours d'organes et la détection d'objets faiblement contrastés sont perturbées par les interférences constructives et destructives des échos produits par les multidiffuseurs contenus dans le milieu étudié, ceci en relation avec le caractère cohérent de l'onde ultrasonore émise par le transducteur piézoélectrique. Ce phénomène parasite est analogue, dans le domaine acoustique, à celui connu sous le nom de "speckle" dans le domaine optique et qui donne lieu aux "grains de lumière" que l'on rencontre souvent associés à l'émission laser. Les principaux inconvénients de ce bruit d'interférence dans le domaine ultrasonore sont, d'une part, une dégradation de la qualité des images échographiques, notamment une perte de visibilité en régime de faibles contrastes, et, d'autre part, une bande de fréquence large et une forte variance qui rendent inefficaces les procédés usuels de détection de contour.

Il est donc clair que la réduction du "speckle" est déterminante pour l'amélioration de la qualité des images échographiques. Dans ce but, différentes méthodes ont été envisagées :

- d'une part, celles qui consistent à traiter le signal avant acquisition, de façon à obtenir une décorrélation du "speckle". C'est, par exemple, la composition spatiale (voir l'article de C.B. Burkhardt, dans IEEE Trans. Sonics Ultrasonics, SU25 1-6 (1978)). Cette méthode conduit en général à des images échographiques de bonne qualité. Elle présente cependant l'inconvénient de nécessiter un dispositif de traitement électronique complexe et onéreux. De plus, le temps d'acquisition est relativement long, ce qui exclut la possibilité d'obtenir des images en temps réel.

- d'autre part, les méthodes de lissage après formation de l'image, comme, par exemple, l'utilisation d'un filtre passe-bas qui réduit effectivement les fluctuations dues au "speckle", mais introduit un flou dans les images en étalant les contours.

Aussi, le problème technique à résoudre par l'objet de la présente invention est de proposer un échographe ultrasonore comprenant au moins un transducteur piézoélectrique, un étage d'émission d'un faisceau ultrasonore, et un étage de réception et de traitement des signaux échographiques e renvoyés vers le transducteur, échographe ultrasonore qui serait du type "à traitement a posteriori du signal", mais qui réduirait l'effet de "speckle" de façon sensible tout en gardant des contours d'images nets.

La solution à ce problème technique consiste, selon la présente invention, en ce que ledit étage de réception et de traitement comporte au moins un filtre morphologique en échelle de gris, d'élément structurant g dans un domaine D, et réalisé à l'aide de moyens élémentaires d'érosion et de dilatation appliqués auxdits signaux échographiques.

La morphologie mathématique et son application au traitement d'images sont connues de l'ouvrage de J. Serra "Image analysis and mathematical morphology" Academic Press, 1982. Ce document concerne essentiellement l'analyse morphologique d'images binaires et montre comment, à partir des opérations d'érosion et de dilatation, on peut obtenir des images structurées, exemptes d'irrégularités, et sur lesquelles il est possible de faire des mesures précises. En substance, la morphologie mathématique vise à quantifier les structures et formes d'images à l'aide de relations entre l'image et un petit élément fermé, appelé élément structurant, que l'on déplace à travers l'image. Ces relations proviennent des opérations élémentaires d'érosion (notée e-g) qui, schématiquement (on verra plus loin en quoi elle consiste exactement), donne une image plus structurée par défaut, et de dilatation (notée e + g) qui, inversement, donne une image plus structurée par excès. A, proprement parler, l'érosion et la dilatation ne sont pas des filtres morphologiques puisqu'ils ne vérifient pas la propriété d'idempotence. C'est pourquoi on construit, à partir de l'érosion et de la dilatation, des opérations morphologiques dites de fermeture et d'ouverture. La fermeture est une dilatation suivie d'une érosion, alors que l'ouverture est une érosion suivie d'une dilatation. La fermeture et l'ouverture restituent des images, plus structurées, de dimensions voisines de celles de l'image initiale; toutefois, le fermé reste plus grand et l'ouvert plus petit. En échographie classique, où l'image n'est pas binaire mais analogique, on utilise des filtres morphologiques en échelle de gris dont la définition sera donnée plus loin dans la description.

Il est clair que, dans toutes ces opérations, la taille du domaine D de l'élément structurant joue un rôle très important. En effet, un élément structurant de grande dimension pourra absorber de façon plus efficace les irrégularités de l'image et donc réduire fortement les effets du "speckle". Mais, dans le même temps, il contribuera à une dégradation du pouvoir séparateur de l'instrument considéré. Aussi, il convient de trouver un compromis raisonnable entre un lissage des fluctuations du signal et la préservation de petits détails. Selon un mode d'exécution particulier de l'invention, il est apparu préférable que la dimension du domaine D de l'élément structurant g est au plus égale à la résolution de l'échographe. Ainsi se trouve préservé le pouvoir de résolution de l'appareil qui, dans le domaine médical, est tout à fait déterminant. Plus précisément, la Demanderesse a montré qu'une configuration avantageuse est celle où la dimension de l'élément structurant est sensiblement égale à la moitié de la résolution de l'échographe.

La description qui va suivre, en regard des dessins annexés donnés à titre d'exemples non limitatifs, fera bien comprendre en quoi consiste l'invention et comment elle peut être réalisée.

La figure 1 est le schéma d'un échographe ultrasonore selon l'invention.

La figure 2 représente le dilaté 2b, l'érodé 2c, le fermé 2d, l'ouvert 2e et le fermé-ouvert 2f d'un signal échographique 2a, dans le cas d'un élément structurant plat.

La figure 3 représente le fermé du signal échographique de la figure 2a dans le cas d'un élément structurant volumique.

La figure 4 représente le fermé du signal échographique de la figure 2a dans le cas d'une morphologie multiplicative.

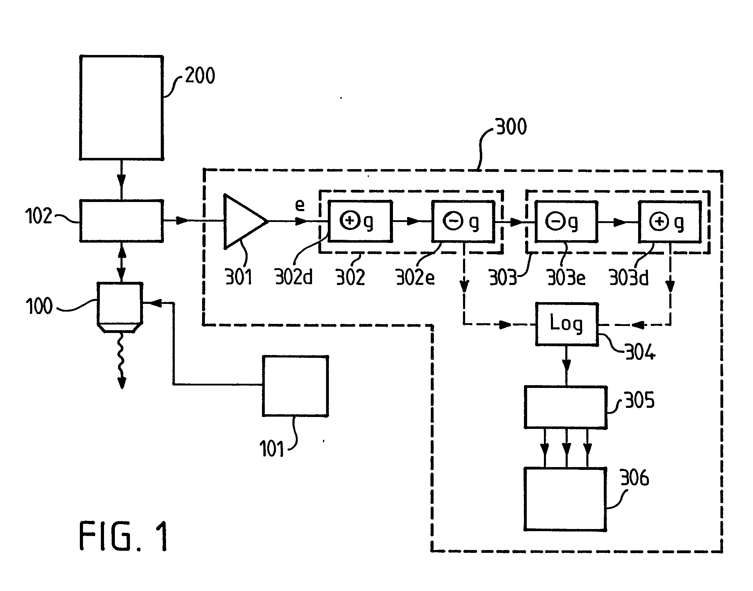

La figure 1 donne le schéma d'un échographe ultrasonore comprenant un transducteur piézoélectrique 100, un étage 200 d'émission d'un faisceau ultrasonore, et un étage 300 de réception des signaux échographiques e renvoyés vers le transducteur 100, ainsi qu'un dispositif 101 de commande de balayage mécanique du transducteur. A la place de ce transducteur, on pourrait utiliser, bien entendu, un réseau de transducteurs associé alors à un dispositif de commande de balayage électronique. De façon classique, l'étage d'émission 200 comprend un séquenceur composé d'un oscillateur, de fréquence 32 MHz par exemple, et d'un diviseur de fréquence qui commande à la fréquence de récurrence de 5kHz un générateur dont les signaux électriques d'excitation sont envoyés vers le transducteur 100 qui les convertit en trains périodiques de signaux impulsionnels ultrasonores. Un séparateur 102 des étages d'émission 200 et de réception et de traitement 300 est inséré entre le transducteur 100 et lesdits étages 200, 300 et évite l'aveuglement des circuits de réception par les signaux d'émission.

L'étage de réception et de traitement 300 comprend, en sortie du séparateur 102, un amplificateur haute-fréquence 301 incluant la compensation du gain en fonction de la profondeur, un amplificateur de compression logarithmique 304, un dispositif de mémorisation et de conversion de balayage 305, et un dispositif 306 de visualisation. Comme le montre la figure 1, l'étage de réception et de traitement comporte également des filtres morphologiques en échelle de gris 302, 303 d'élément structurant g dans un domaine D, et réalisé à l'aide de moyens éléments d'érosion 302e, 303e et de dilatation 302d, 303d appliqués aux signaux échographiques e.

Les moyens de dilatation 302d, 303d transforment un signal e(x,y) à deux dimensions en un signal dilaté D(x,y) donné, dans une définition additive, par la relation :
$$D(x,y) = (e + g)(x,y) = \underset{x',y' \in D}{\text{Max}} \left[ e(x + x', y + y') + g(x',y') \right]$$

Inversement, les moyens d'érosion 302e, 303e donnent d'un signal e(x,y) un signal érodé E(x,y) défini par :
$$E(x,y) = (e-g)(x,y) = \underset{x',y' \in D}{\text{Min}} \left[ e(x + x', y + y') - g(x',y') \right]$$

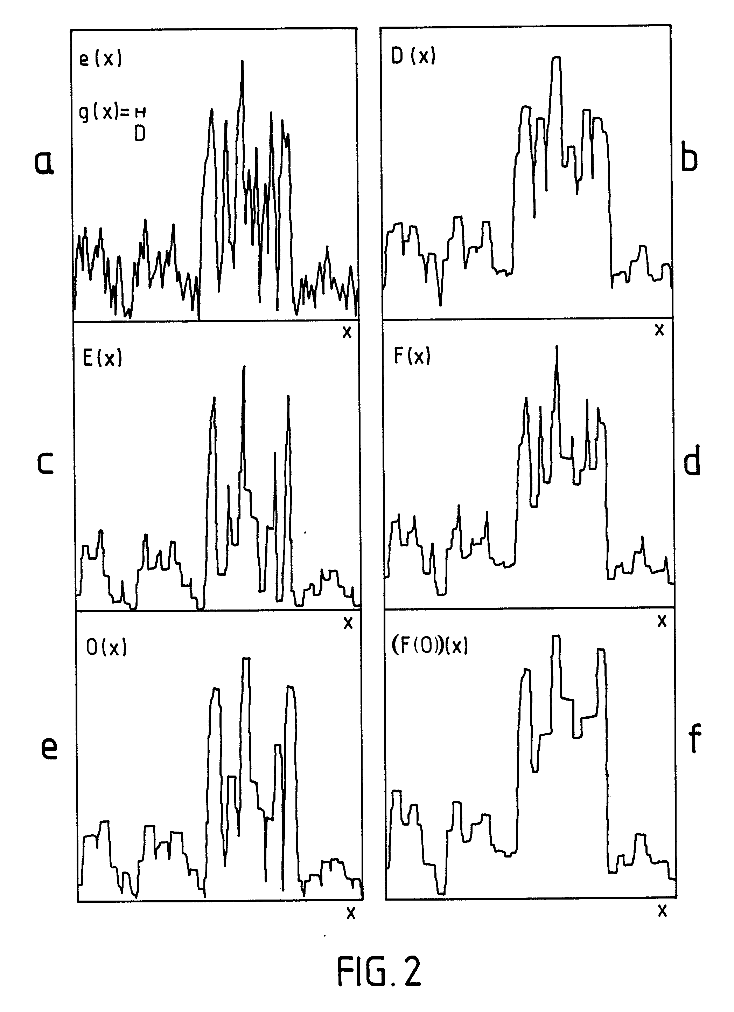

La figure 2 illustre ces deux opérations dans le cas d'un signal échographique initial e(x) qui, dans cet exemple, est l'enveloppe d'un écho représentant un kyste dans un milieu diffusant. Les fluctuations du signal liées au "speckle" sont clairement visibles à la fois dans la région du kyste que dans le fond diffusant. Les figures 2b à 2f illustrent les différentes opérations morphologiques réalisées sur ce signal, à l'aide d'un élément structurant g(x) dit "plat" défini par :
g(x) = 0 dans tout le domaine D.

Cet élément structurant, ainsi que le domaine D, sont montrés sur la figure 2a. De façon à ne pas apporter de déformations trop importantes au signal qui pourraient conduire à une interprétation erronée, il est avantageux de donner au domaine D de l'élément structurant une dimension raisonnable, à savoir au plus égale à la résolution de l'échographe. Dans les exemples de la figure 2, cette dimension est de l'ordre de la moitié de la résolution axiale.

Le dilaté D(x) et l'érodé E(x) du signal E(x) sont représentés respectivement aux figures 2b et 2c. On constate sur ces figures que l'érosion (resp. la dilatation) remplace simplement chaque échantillon par le minimum (resp. maximum) local sur tout le domaine D de l'élément structurant, conformément aux relations :

$$D(x) = \text{Max } e(x + x')$$
$$x' \epsilon D$$
$$E(x) = \text{Min } e(x + x')$$
$$x' \epsilon D$$

Ces opérations d'érosion et de dilatation permettent de définir les opérations morphologiques de fermeture et d'ouverture. Le fermé F(x) du signal e-(x) est donné par :

$$F(x) = [(e + g) - g](x)$$

Il s'agit donc d'une érosion appliquée à une dilatation. C'est cette opération qu'effectue le filtre morphologique 302 de la figure 1, réalisé à l'aide d'un moyen de dilatation 302d suivi d'un moyen d'érosion 302e.

Inversement, l'ouvert O(x) est donné par la relation :

$$O(x) = [(e-g) + g](x)$$

L'opération d'ouverture se compose donc d'une érosion puis d'une dilatation. Le filtre 303 de la figure 1, réalisé à l'aide d'un moyen d'érosion 303e suivi d'un moyen de dilatation 303d, est un filtre morphologique de fermeture.

Les figures 2d et 2e montrent respectivement le fermé et l'ouvert du signal échographique de la figure 2a. De façon schématique, on peut dire que l'ouvert (resp. le fermé) est caractérisé par sa capacité à tronquer les pics (resp. les vallées) les plus pointu(e)s indépendamment de leur hauteur (resp. leur profondeur) absolue. Enfin, la figure 2f représente le résultat d'une opération de fermeture-ouverture F[O(x)] réalisé, par le filtre de fermeture 302 de la figure 2 suivi par le filtre d'ouverture 303, sur le signal échographique e(x) de la figure 2a.

Il faut également souligner, comme cela apparaît clairement sur la figure 2, que les bords séparant le kyste du fond diffusant ne sont pas rendus flous, or, il est connu que la perception d'une image dépend étroitement de la qualité de ses contours. Ceci est une supériorité des filtres morphologiques par rapport à un filtre passe-bas par exemple.

Après quelques essais sur différentes images, il est apparu à la Demanderesse que le filtre de fermeture 302 et le filtre de fermeture-ouverture 302-303 s'avèrent les mieux adaptés à la réduction du "speckle", dans l'optique d'une meilleure qualité d'image. La comparaison entre les figures 2d et 2f permet de comprendre la différence qui existe entre ces deux types de filtres.

Le filtre de fermeture réduit effectivement les fluctuations dues aux interférences destructives qui produisent des taches sombres dans l'image. Par contre, les pics liés aux interférences constructives demeurent. Le filtre de fermeture-ouverture tronquent ces derniers pics, mais alors les détails fins, inférieurs à la dimension du domaine de l'élément structurant, tels que les parois de vaisseaux sanguins, sont peu visibles. Ainsi, il ressort que le filtre de fermeture est plus avantageux lorsque des structures fines sont présentes dans le milieu diffusant, tandis que le filtre de fermetureouverture est plus utile, par exemple comme une première étape d'un procédé de détection de contour.

Comme on peut le voir à la figure 2, l'utilisation d'un élément structurant "plat" conduit à un aspect déplaisant de l'image dû à des fronts raides et à des vallées ou des pics brutalement tronqués. Deux méthodes peuvent être proposées pour s'affranchir de cet effet indésirable. Une première méthode consiste à utiliser comme élément structurant g un élément volumique défini par :

$$g \neq 0 \text{ dans le domaine D}$$

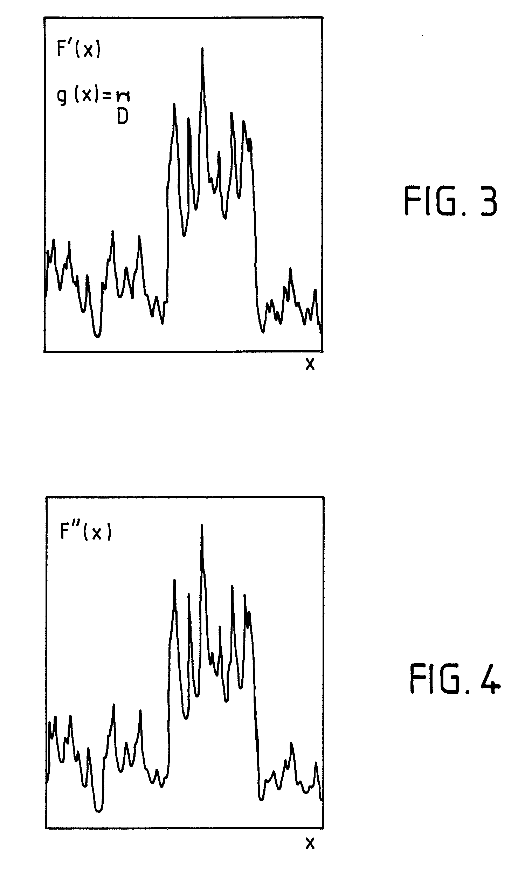

La figure 3 montre le fermé $F'(x)$ du signal échographique de la figure 2a, obtenu avec un élément structurant g(x) convexe.

La seconde méthode consiste à utiliser, dans le cas d'un élément structurant volumique, une définition multiplicative des opérations d'érosion et de dilatation :

$$(e-g)(x,y) = \text{Min } e(x + x', y + y') \times g(x', y')$$
$$x', y' \epsilon D$$
$$(e + g)(x,y) = \text{Max } e(x + x', y + y') \times g(x', y')$$
$$x', y' \epsilon D$$

La figure 4 montre le fermé $F''(x)$ du signal échographique de la figure 2a, obtenu à l'aide des opérations multiplicatives ci-dessus.

On constate que, dans les deux cas, les transitions raides deviennent plus progressives. En théorie, la seconde méthode, dite multiplicative, donne un meilleur lissage dans les zones de faible contraste où les pics et les vallées sont moins pointus en moyenne. Toutefois, la Demanderesse a observé qu',en fait, les deux méthodes conduisent à des résultats voisins lorsque l'élément structurant est convenablement choisi. D'autre part, il ne faut pas perdre de vue que la méthode additive est plus facile à mettre en oeuvre.

Toutes les considérations qui viennent d'être développées à propos d'une image échographique e(x) à une dimension s'appliquent également au cas d'une image échographique e(x,y) à deux dimensions. Il faut toutefois, dans ce dernier cas, apporter quelques précisions quant à la forme de l'élément structurant.

Le plus simple des éléments structurants est l'élément structurant "plat" dont le domaine D est rectangulaire (incluant le carré), les dimensions du rectangle étant adaptées aux résolutions axiale et latérale de l'échographe. En général, la résolution axiale est meilleure que la résolution latérale.

De façon à éviter l'aspect déplaisant de l'image dû à un élément structurant rectangulaire, il est avantageux d'utiliser un élément structurant "plat" de domaine D elliptique, dont le grand axe (resp. le petit axe) équivaut sensiblement à la moitié de la résolution latérale (resp. axiale).

Au lieu d'utiliser un élément structurant "plat", il est également possible d'avoir recours à un élément structurant volumique que l'on peut écrire, par exemple, sous la forme de deux fonctions gaussiennes séparées :

$$g(x,y) = kg_{ax}(x)g_{lat}(y)$$
$$\text{avec } g_{ax}(x) = \exp(-x^2/\sigma_a^2)$$
$$\text{et } g_{lat}(y) = \exp(-y^2/\sigma_l^2)$$

Le domaine D est, dans ce cas, limité à la partie convexe des fonctions gaussiennes.

Il faut signaler, en outre, que dans le cas d'un échographe à balayage sectoriel, l'orientation de l'élément structurant doit suivre l'orientation du faisceau sur toute l'image.

## Revendications

1. Echographe ultrasonore comprenant au moins un transducteur piézoélectrique (100), un étage (200) d'émission d'un faisceau ultrasonore, et un étage (300) de réception et de traitement des signaux échographiques e renvoyés vers le transducteur (100), caractérisé en ce que ledit étage (300) de réception et de traitement comporte au moins un filtre morphologique en échelle de gris (302,303), d'élément structurant g dans un domaine D, et réalisé à l'aide de moyens élémentaires d'érosion (302e,303e) et de dilatation (302d,303d) appliqués auxdits signaux échographiques.

2. Echographe ultrasonore selon la revendication 1, caractérisé en ce que la dimension du domaine D de l'élément structurant g est au plus égale à la résolution de l'échographe.

3. Echographe ultrasonore selon la revendication 2, caractérisé en ce que la dimension du domaine D de l'élément structurant g est sensiblement égale à la moitié de la résolution de l'échographe.

4. Echographe ultrasonore selon l'une quelconque des revendications 1 à 3, caractérisé en ce que ledit filtre morphologique (302) est un filtre de fermeture, réalisé à l'aide d'un moyen de dilatation (302d) suivi d'un moyen d'érosion (302e).

5. Echographe ultrasonore selon la revendication 4, caractérisé en ce que ledit filtre de fermeture (302) est suivi d'un filtre morphologique d'ouverture (303), réalisé à l'aide d'un moyen d'érosion (303e) suivi d'un moyen de dilatation (303d).

6. Echographe ultrasonore selon l'une quelconque des revendications 1 à 5, caractérisé en ce que l'élément structurant g est un élément plat défini par g = 0 dans le domaine D.

7. Echographe ultrasonore selon l'une quelconque des revendications 1 à 5, caractérisé en ce que l'élément structurant g est un élément volumique défini par g≠0 dans le domaine D.

8. Echographe ultrasonore selon l'une des revendications 6 ou 7, caractérisé en ce que les moyens de dilatation (302d,303d) et d'érosion (302e,303e) sont définis respectivement par les opérations suivantes :
$$(e+g)(x,y) = \text{Max } [e(x+x',y+y') + g(x',y')]$$
$$x',y' \sigma D$$
$$(e-g)(x,y) = \text{Min } [e(x+x',y+y')-g(x',y')]$$
$$x',y' \epsilon D$$

9. Echographe ultrasonore selon la revendication 7, caractérisé en ce que les moyens de dilatation (302d,303d) et d'érosion (302e,303e) sont définis respectivement par les opérations suivantes :
$$(e+g)(x,y) = \text{Max } e(x+x',y+y')xg(x',y')$$
$$x',y' \epsilon D$$
$$(e-g)(x,y) = \text{Min } e(x+x',y+y')/g(x',y')$$
$$x',y' \epsilon D$$

10. Echographe ultrasonore selon l'une quelconque des revendications 1 à 9, caractérisé en ce que le domaine D est rectangulaire.

11. Echographe ultrasonore selon l'une quelconque des revendications 1 à 9, caractérisé en ce que le domaine D est elliptique.

12. Echographe ultrasonore selon la revendication 9, caractérisé en ce que l'élément structurant est donné par :
$$g(x,y) = kg_{ax}(x)g_{lat}(y)$$
$$\text{avec } g_{ax}(x) = \exp(-x^2/\sigma_a^2)$$
$$\text{et } g_{lat}(y) = \exp(-y^2/\sigma_l^2),$$
le domaine D étant limité à la partie convexe des fonctions gaussiennes $g_{ax}(x)$ et $g_{lat}(y)$.

FIG. 1

FIG. 2

2—Ⅲ—PHF 88-541

FIG. 3

FIG. 4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | ULTRASONIC IMAGING, vol. 10, no. 1, janvier 1988, pages 66-67, "Abstracts, ultrasonic imaging and tissue characterization symposium", Academic Press, Inc., Duluth, MN, US; A. COLLET BILLON: "Use of grey tone morphology for specle smoothing in echography" * Page 66, résumé * | 1,4,7,8 | G 01 S   7/52 G 06 F   15/68 |
| A | IEEE TRANSACTIONS ON PATTERN ANALYSIS & MACHINE INTELLIGENCE, vol. PAMI-9, no. 4, juillet 1987, pages 532-550, IEEE, New York, NY, US; R.M. HARALICK et al.: "Image analysis using mathematical morphology" * Page 532, résumé; paragraphe I; pages 543-549, paragraphe IV * | 1 | |

|  | DOMAINES TECHNIQUES RECHERCHES (Int. Cl.4) |
|---|---|
|  | G 01 S G 07 F |

Le présent rapport a été établi pour toutes les revendications

| Lieu de la recherche | Date d'achèvement de la recherche | Examinateur |
|---|---|---|
| LA HAYE | 05-09-1989 | VAN WEEL E.J.G. |

EPO FORM 1503 03.82 (P0402)